# EUROPEAN PATENT APPLICATION

(11) **EP 1 813 979 A2**
(43) Date of publication of application: **01.08.2007**
(21) Application number: 07250291.7
(22) Date of filing: 24.01.2007
(51) Int. Cl.: G02F 1/1343, G02F 1/1362

(54) **Liquid crystal apparatus and electronic device**

(30) Priority: 26.01.2006 JP 2006017321; 28.06.2006 JP 2006177829
(71) Applicant: Epson Imaging Devices Corporation, Azumino-shi Nagano 399-8285 (JP)
(72) Inventor: Fujita, Shin c/o Sanyo Epson Imaging Devices Corp., Azumino-shi Nagano 399-8285 (JP); Matsushima, Toshiharu Sanyo Epson Imag. Dev. Corp., Azumino-shi Nagano 399-8285 (JP)
(74) Representative: Cloughley, Peter Andrew

(57) **Abstract**

A liquid crystal apparatus includes a substrate (1) that retains liquid crystal (4), a switching element provided in the substrate, a first insulating film (52) above the switching element, a first electrode (20) above the first insulating film, a second insulating film (53) above the first electrode, and a second electrode (10) above the second insulating film. The second electrode has a plurality of slits (10a) and produces an electric field between the first electrode and the second electrode via each of the slits.

## Description

The present invention relates to a liquid crystal apparatus and an electronic device suited for use in displaying various types of information.

Generally, display modes of liquid crystal apparatus are broadly divided into the twisted nematic (TN) mode, vertical alignment mode, which aims at a wider viewing angle and high contrast, and transverse electric field mode, typified by In-plane switching (IPS) mode and fringe field switching (FFS) mode.

The IPS mode is a mode in which an electric field is applied to liquid crystal substantially in parallel with a substrate. This mode has the advantage of an improved visual characteristic, compared with the TN mode.

However, in an IPS-mode liquid crystal apparatus, a pixel electrode formed from a transparent conductive material, such as indium tin oxide (ITO), and a common electrode for producing a lateral electric field between the common electrode and the pixel electrode are disposed in the same layer. Therefore, liquid crystal molecules directly above the pixel electrode are not sufficiently driven, so that transmittance decreases.

In contrast, for an FFS-mode liquid crystal apparatus, a layer including a common electrode is disposed below a layer including a pixel electrode. Therefore, a lateral electric field can be applied on liquid crystal molecules directly above the pixel electrode, and the liquid crystal molecules at the region can be sufficiently driven. As a result, the FFS-mode liquid crystal apparatus has the advantage of an improved transmittance, compared with the IPS-mode liquid crystal apparatus.

One such FFS-mode liquid crystal apparatus is disclosed in JP-A-2001-235763 and JP-A-2002-182230.

The FFS-mode liquid crystal apparatus described in each of the patent documents uses an amorphous silicon (α-Si) TFT element.

However, in the liquid crystal apparatus described in JP-A-2001-235763, a pixel-electrode portion that overlaps a TFT element or a common electrode line has a non-flat shape, i.e., a stepped shape, so liquid crystal molecules are irregularly aligned in the vicinity of the portion. Therefore, the portion is not substantially used for display, so that an aperture ratio decreases.

An advantage of some aspects of the invention is that it provides an FFS-mode liquid crystal apparatus that can realize a high aperture ratio and also provides an electronic device that includes the liquid crystal apparatus.

A first aspect of the invention provides a liquid crystal apparatus including a substrate that retains liquid crystal, a switching element provided in the substrate, a first insulating film above the switching element, a first electrode above the first insulating film, a second insulating film above the first electrode, and a second electrode above the second insulating film. The second electrode has a plurality of slits and produces an electric field between the first electrode and the second electrode via each of the slits.

The first insulating film can be disposed above at least the switching element, have flatness, and can be formed from, for example, acrylic resin. The second insulating film can be formed from, for example, SiO₂ or SiNx. Preferably, the electric field may be a fringe field that has a strong electric field component in a direction substantially parallel with the substrate and in a direction substantially perpendicular thereto (upper side to the substrate) when the liquid crystal is driven. This enables an FFS liquid crystal apparatus.

Preferably, the switching element may be, for example, a three-terminal element, typified by a low-temperature polysilicon (LTPS) TFT element, polysilicon (P-Si) TFT element, and α-Si TFT element, or a two-terminal nonlinear element, typified by a thin film diode (TFD) element.

Generally, if a region where the first electrode and the second electrode two-dimensionally overlap each other, i.e., a display region has a nonflat section (stepped section), liquid crystal molecules are irregularly aligned in the vicinity of that region when the liquid crystal molecules are driven. This results in degradation in display quality. It is thus necessary to cover that region with a light-shielding layer or other layers. However, if the region is covered with the light-shielding layer, an aperture ratio decreases correspondingly.

In the liquid crystal apparatus according to an aspect of the invention, the first insulating film functions as a planarized film and is disposed below the first transparent electrode, the second insulting film, and the second transparent electrode. Therefore, the first transparent electrode, the second insulting film, and the second transparent electrode can be flat. As a result, the electrodes do not have a nonflat section (stepped section) within a region where the first electrode and the second electrode two-dimensionally overlap each other (hereinafter sometimes referred to simply as "display region"). In particular, in the vicinity of the switching element, where the electrodes are apt to have a stepped section within the display region, depending on the shape of the switching element, this possibility can be prevented. Therefore, the display region can extend to the vicinity of the switching element, and a high aperture ratio can be achieved.

Preferably, the substrate may have a lead electrically coupled to the switching element (e.g., a source line), and the lead may be covered with the first insulating film. In this case, a portion of the electrode directly above the lead and within the display region can be flat. Thus the display region can extend to the vicinity of the lead, and a high aperture ratio can be achieved. As a result, the liquid crystal apparatus according to an aspect of the invention can be suitably used as a high-definition liquid crystal apparatus.

In the liquid crystal apparatus, the second insulating film is disposed between the first electrode and the second electrode. Therefore, the second insulating film functions as a dielectric film that forms a storage capacitor. Thus the thickness of the second insulating film (dielectric film) can be easily adjusted, and the capacitance of the storage capacitor can be easily adjusted. In the case where a large capacitance of the storage capacitor is required for, for example, a high-definition liquid crystal display apparatus, setting a thin thickness of the second insulating film (dielectric film) enables a sufficient capacitance of the storage capacitor. Accordingly, the display quality can be improved and the power consumption can be reduced.

Preferably, the thickness of the second insulating film (dielectric film) may be set so that the capacitance of the storage capacitor formed therein is, preferably, about 100 fF to about 600 fF, more preferably, about 200 fF to about 800 fF. In the case of a definition of 200 PPi or more, the thickness of the second insulating film preferably may be about 50 nm to about 400 nm. In the case of a definition of less than 200 PPi, the thickness of the second insulating film preferably may be about 200 nm to about 1000 nm.

The strength of a fringe field (electric field) formed between the first electrode and the second electrode increases with a reduction in the thickness of the second insulating film (dielectric film), and the liquid crystal molecules can be easily operated even with a lower voltage. For example, if the thickness of the second insulating film (dielectric film) is set at about 50 nm to about 200 nm in a normally-black display mode, a driving voltage that is applied between the first electrode and the second electrode and that corresponds to white display can be in the order of about 2 V to about 5 V; if the thickness of the second insulating film (dielectric film) is set at about 200 nm to about 600 nm in the normally-black display mode, a driving voltage that is applied between the first electrode and the second electrode and that corresponds to white display can be on the order of about 3 V to about 5 V. In addition, since the thickness of the second insulating film (dielectric film) is significantly small, the throughput when the second insulating film (dielectric film) is formed can also be improved.

It is preferable that, in the liquid crystal apparatus, the first electrode may be a common electrode, and the second electrode may be at least one pixel electrode electrically coupled to the switching element.

In this case, the first electrode can be a common electrode and the second electrode can be at least one pixel electrode (subpixel) electrically coupled to the switching element via a contact hole in each of the first insulating film and the second insulating film. Therefore, the pixel electrode can extend to the vicinity of each of the switching element and the lead (e.g., a source line), and thus a high aperture ratio can be achieved.

Preferably, the common electrode may be disposed on the first insulating film (planarized film) so as to cover the substantially entire surface thereof. In this case, a sufficient value of a time constant relating to the common electrode (the product of the capacitance C and the resistance R) can be satisfied without a common electrode line. From this point of view, the effective area of the pixel electrode can be increased and thus a higher aperture ratio can be achieved.

Alternatively, it is preferable that, in the liquid crystal apparatus, the first electrode may be at least one pixel electrode electrically coupled to the switching element, and the second electrode may be a common electrode.

In this case, the first electrode can be at least one pixel electrode (subpixel) electrically coupled to the switching element via a contact hole in each of the first insulating film and the second insulating film and the second electrode can be a common electrode. Therefore, the pixel electrode can extend to the vicinity of each of the switching element and the lead (e.g., a source line), and thus a high aperture ratio can be achieved.

Preferably, the at least one pixel electrode may include a plurality of pixel electrodes, the lead may be disposed between adjacent pixel electrodes of the pixel electrodes, and at least a portion of the common electrode may two-dimensionally overlap the lead.

When the liquid crystal is driven, if a voltage for driving any one of the pixel electrodes (first electrode) is high, the strength of a fringe field (electric field) produced between the first pixel electrode and the common electrode is high correspondingly. However, the presence of the common electrode, which two-dimensionally overlaps the lead (e.g., source line), prevents the produced fringe field (electric field E) from affecting a second pixel electrode adjacent to the first pixel electrode. As a result, adverse effects caused by the fringe field (electric field) of the first electrode to the alignment of liquid crystal molecules directly above the adjacent second pixel electrode can be reduced. Thus an excellent display quality can be obtained and a higher definition can be achieved.

It is preferable that, in the liquid crystal apparatus, the common electrode may be electrically coupled to a common electrode line having a resistance smaller than a resistance of the common electrode. Preferably, the common electrode may be formed from a high resistance material (e.g., ITO), and the common electrode line may be formed from a low resistance material and may have a three-layer structure including a titanium layer, an aluminum layer, and a titanium layer. It is preferable that the common electrode may be electrically coupled to the common electrode line via a first contact hole in the first insulating film and a second contact hole in the second insulating film. Therefore, since the total resistance of the common electrode line and the common electrode can be small, the time constant relating to the common electrode can be small. Thus adverse effects on the display quality can be reduced.

It is preferable that the liquid crystal apparatus may further include an opposed substrate facing the substrate, the liquid crystal being disposed between the substrate and the opposed substrate, and the opposed substrate may include a light-shielding layer at a position that corresponds to each of the first contact hole and the second contact hole.

In this case, even if the liquid crystal molecules are irregularly aligned in the vicinity of the contact holes, a region of the irregularly aligned liquid crystal molecules can be covered with the light-shielding layer. As a result, a display quality degradation caused by the irregularly aligned liquid crystal molecules can be reduced.

A second aspect of the invention can provide an electronic device that includes the above-described liquid crystal apparatus as a display unit.

Embodiments of the invention will be described, by way of example only, with reference to the accompanying drawings, wherein like numbers reference like elements.

Fig. 1 is a plan view that shows a schematic structure of a liquid crystal apparatus according to a first embodiment of the invention.

Fig. 2 is an enlarged fragmentary plan view that shows a pixel arrangement according to the first embodiment.

Fig. 3 is a fragmentary sectional view of a sub-pixel taken along the line III-III in Fig. 2.

Fig. 4 is an enlarged fragmentary plan view that shows a pixel arrangement according to a comparative example.

Fig. 5 is a fragmentary sectional view of a sub-pixel taken along the line V-V in Fig. 4.

Fig. 6 is an enlarged fragmentary plan view that shows a pixel arrangement according to a second embodiment.

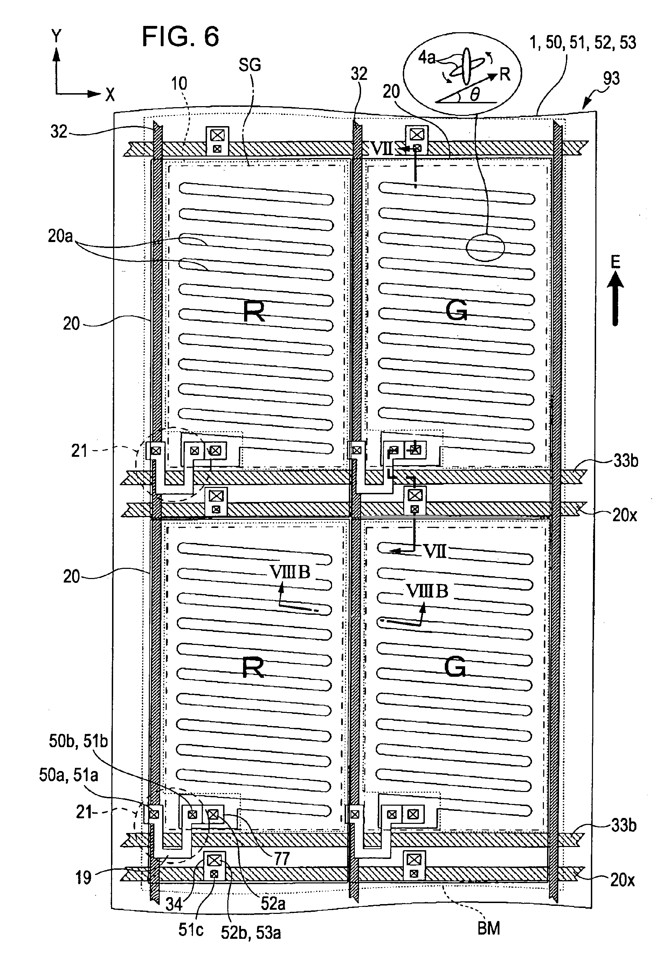

Fig. 6 is a fragmentary sectional view of a sub-pixel taken along the line VII-VII in Fig. 6.

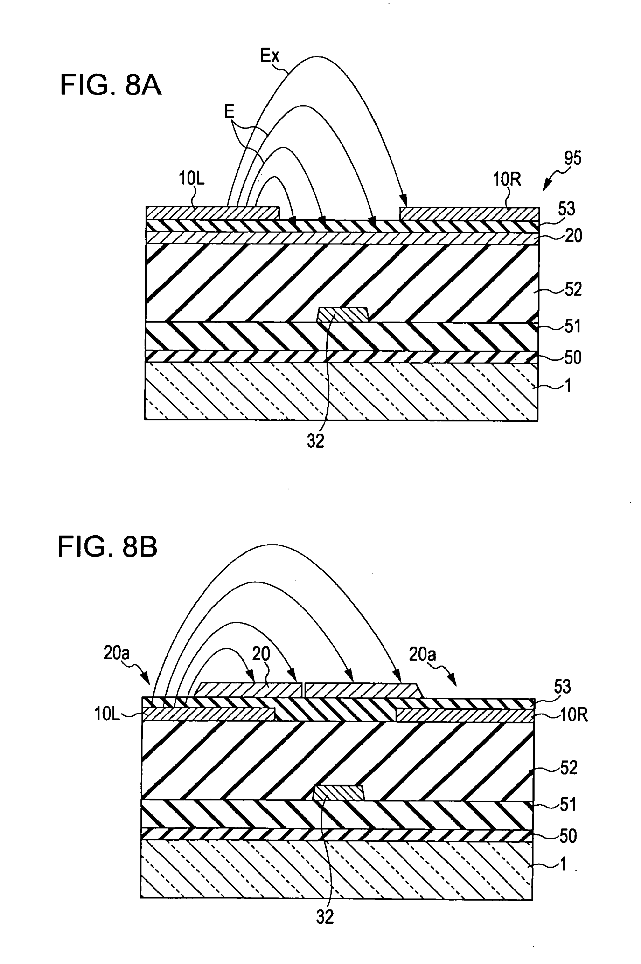

Figs. 8A and 8B are fragmentary sectional views of an element substrate for describing operations and advantages of the second embodiment.

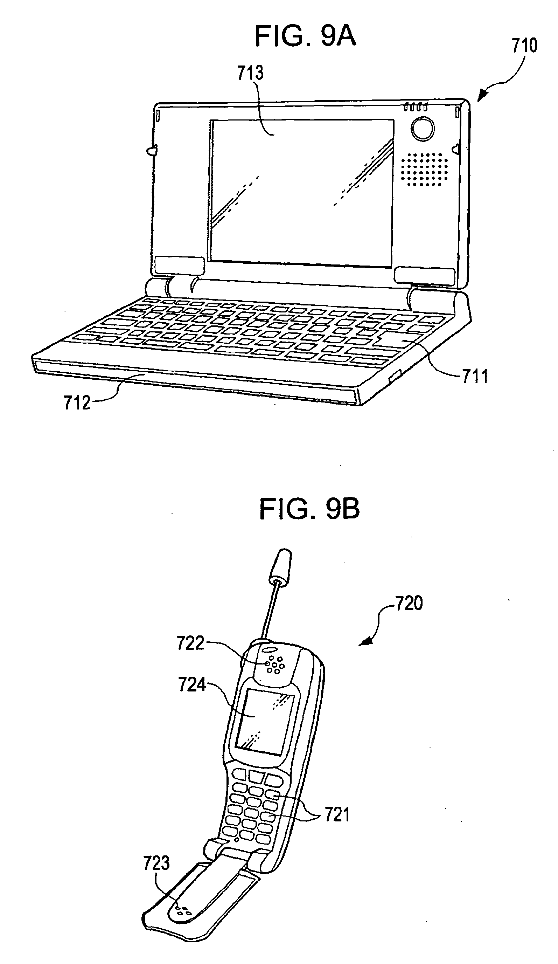

Figs. 9A and 9B show examples of an electronic device that includes a liquid crystal apparatus according to at least one of the embodiments of the invention.

Best mode for carrying out the invention is described below with reference to the accompanying drawings. Embodiments described below provide a liquid crystal apparatus to which the invention is applied.

### First Embodiment

### Structure of Liquid Crystal Apparatus

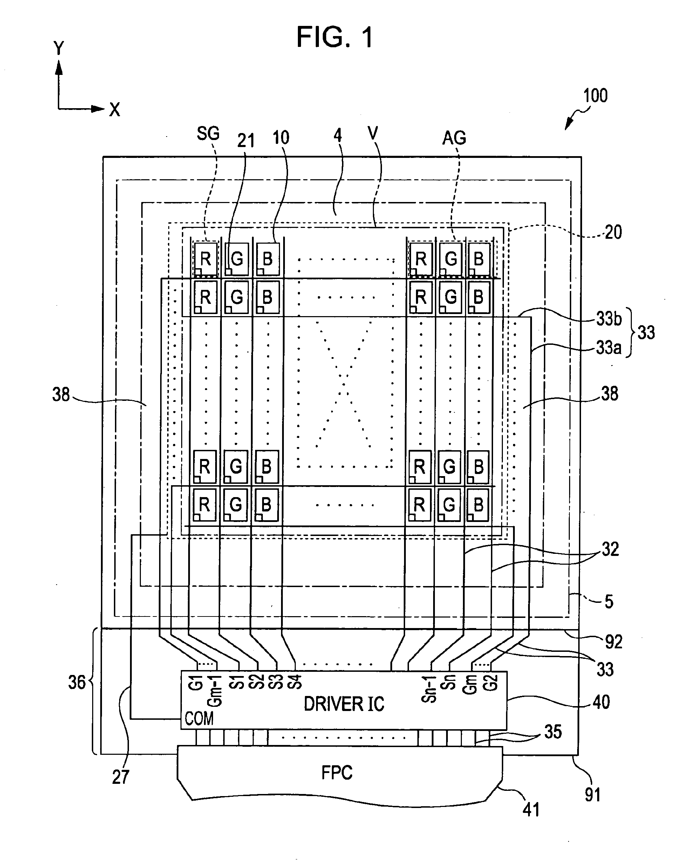

The structure of a liquid crystal apparatus 100 according to a first embodiment of the invention is described below with reference to Fig. 1 and other figures.

Fig. 1 is a plan view that shows a schematic structure of the liquid crystal apparatus 100 according to the first embodiment. A color filter substrate 92 is disposed at the front of the drawing (near a viewer), and an element substrate 91 is disposed at the back of the drawing. In Fig. 1, the vertical direction (column) is defined as the y direction, and the horizontal direction (row) is defined as the x direction. In Fig. 1, a region corresponding to each of red, green, and blue (RGB) colors constitutes a single subpixel region SG, and a pixel matrix of subpixel regions SGs of one row and three columns constitutes a single pixel region AG. Hereinafter, one display region existing in one subpixel region SG is sometimes referred to as a "subpixel", and a display region corresponding to one pixel region AG is sometimes referred to as "a pixel".

In the liquid crystal apparatus 100, the element substrate 91 and the color filter substrate 92 facing each other are bonded together with a frame-like sealing member 5 disposed therebetween, and the inside of the sealing member 5 is filled with a liquid crystal material and forms a liquid crystal layer 4.

The liquid crystal apparatus 100 is an active matrix color display that uses three colors of RGB and that uses low temperature polysilicon thin-film transistor (hereinafter referred to as "LTPS-TFT element 21 ") as a switching element. The liquid crystal apparatus 100 is of an FFS type that controls the alignment of liquid crystal molecules by producing fringe fields (electric fields E) in a direction that is substantially parallel with the element substrate 91, which is provided with electrodes (e.g., pixel electrodes), and in a direction that is substantially perpendicular thereto (viewing side). Therefore, the liquid crystal apparatus 100 can have a high viewing angle. The liquid crystal apparatus 100 is a transmissive display, which performs only transmissive display.

The two-dimensional structure of the element substrate 91 is described below. Main components formed or implemented in the inner surface of the element substrate 91 include a plurality of source lines 32, a plurality of gate lines 33, a plurality of LTPS-TFT elements 21, a plurality of pixel electrodes 10, a common electrode 20, a driver IC 40, leads 35 for an external connection, and a flexible printed circuit (FPC) 41.

As illustrated in Fig. 1, the element substrate 91 includes an overhang 36, which extends outward from a side of the color filter substrate 92. The driver IC 40 is implemented on the overhang 36. An input terminal of the driver IC 40 (not shown) is electrically coupled to a first end of each of the plurality of external-connection leads 35. A second end of each of the plurality of external-connection leads 35 is electrically coupled to the FPC 41.

The source lines 32 extend in the y direction and are spaced in the x direction. A first end of each of the source lines 32 is electrically coupled to an output terminal of the driver IC 40 (not shown).

Each of the gate lines 33 has a three-layer structure including a titanium layer, an aluminum layer, and a titanium layer. The gate lines 33 include first leads 33a extending in the y direction and second leads 33b extending in the x direction from an end of each of the first leads 33a and extending in a viewing area V, which will be described below. The second leads 33b of the gate lines 33 extend in a direction that intersects the source lines 32, i.e., the x direction and are spaced in the y direction. A first end of each of the gate lines 33 is electrically coupled to the output terminal of the driver IC 40 (not shown).

The LTPS-TFT elements 21 are disposed in the vicinity of the respective intersections of the source lines 32 and the second leads 33b of the gate lines 33. The LTPS-TFT elements 21 are electrically coupled to the respective source lines 32, the respective gate lines 33, and the respective pixel electrodes 10.

Each of the pixel electrodes 10 is formed from a transparent conductive material, such as indium tin oxide (ITO), and is disposed in each of the subpixel regions SGs.

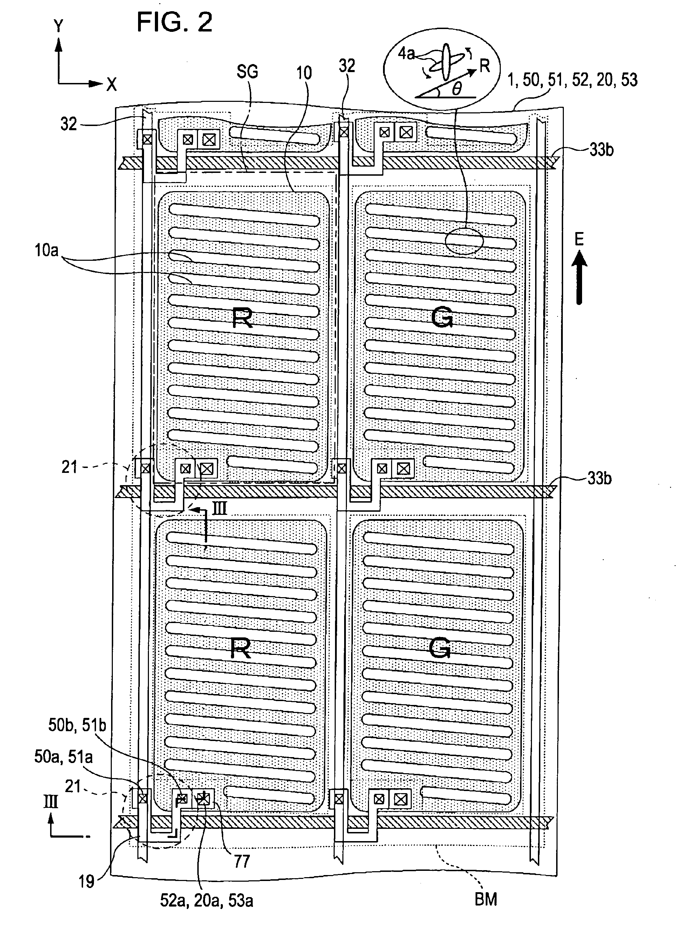

The common electrode 20 is formed from the same material as that of the pixel electrode 10. The common electrode 20 has a region that is substantially the same size as the viewing area V (a region that is surrounded by dashed lines). The common electrode 20 is disposed below the pixel electrodes 10 so as to spread substantially throughout the region. Between the common electrode 20 and the pixel electrodes 10, a third insulating film (dielectric film) 53, which is illustrated in Fig. 2, is disposed. The common electrode 20 is electrically coupled to a COM terminal of the driver IC 40 via a lead 27, which can be formed from the same material as that of the common electrode 20.

The viewing area V is a region where the plurality of pixel regions AGs are arranged in a matrix in the x and y directions (a region that is surrounded by dot-dot-dashed lines). In the viewing area V, an image of characters, numerals, and figures is displayed. A frame area 38 is disposed outside the viewing area V. In the frame area 38, an image is not displayed. An alignment layer (not shown) is disposed on the inner surfaces of the pixel electrodes 10. The alignment layer has been subjected to rubbing processing (see Fig. 2).

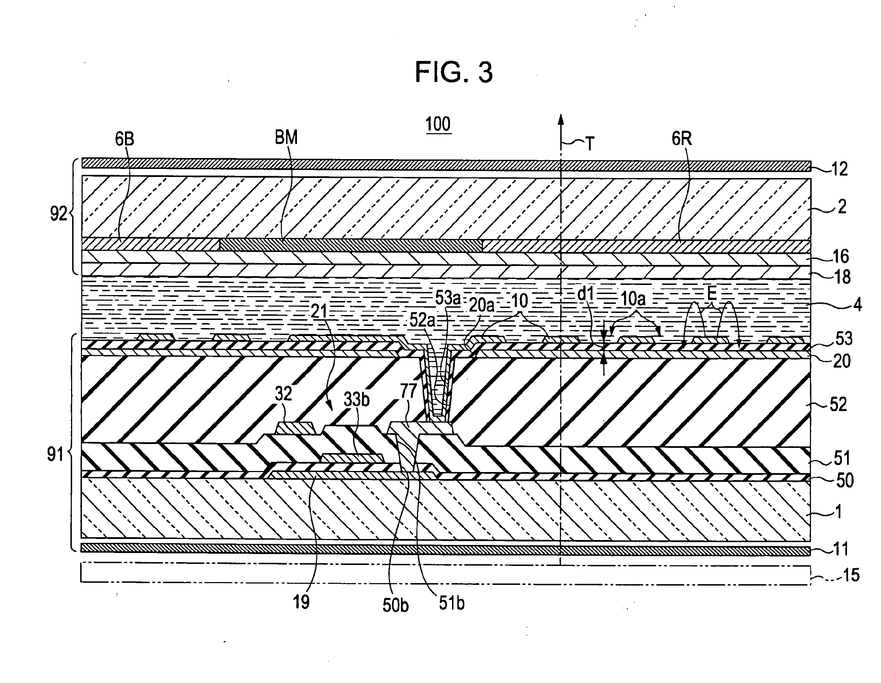

The two-dimensional structure of the color filter substrate 92 is described below. The color filter substrate 92 includes a light-shielding layer (generally called "black matrix" and hereinafter abbreviated as "BM"), color layers 6R, 6G, and 6B, which correspond to three colors of RGB, an overcoat layer 16 (see Fig. 3), and an alignment layer 18 (see Fig. 3). In the following description, the color layer 6 is used when a specific color is not referred to, whereas the color layers 6R, 6G, and 6B are used when the corresponding colors are referred to. The BM is disposed in a partition section for the subpixel regions SGs.

In the liquid crystal apparatus 100 having the above-described structure, on the basis of a signal and electric power from the FPC 41 connected to an electronic device, the driver IC 40 exclusively selects one of the gate lines 33 in the order of G1, G2, ..., Gm-1, and Gm (m is a natural number) in succession. A gate signal having a selection voltage is supplied to the selected gate line 33, whereas a non-selection signal having a non-selection voltage is supplied to the other non-selected gate lines 33. The driver IC 40 supplies source signals according to the content of display to the pixel electrodes 10 corresponding to the selected gate line 33 via the corresponding S1, S2, ..., Sn-1, and Sn (n is a natural number) source lines 32 and the corresponding LTPS-TFT elements 21. As a result, the display state of the liquid crystal layer 4 is switched to a non-selected state or an intermediate display state, so that the state of alignment of the liquid crystal molecules in the liquid crystal layer 4 is controlled. In this way, a desired image can be displayed in the viewing area V.

### Pixel Arrangement

The pixel arrangement of the liquid crystal apparatus 100 according to the first embodiment is described below with reference to Figs. 2 and 3.

Fig. 2 shows a two-dimensional structure of four pixels in the element substrate 91 according to the first embodiment. Fig. 3 shows a cross-section view taken along the line III-III in Fig. 2 and shows a cross-sectional structure of one subpixel taken from a position through one of the LTPS-TFT elements 21.

The pixel arrangement in the element substrate 91 according to the first embodiment is first described below with reference to Figs. 2 and 3.

A low-temperature polysilicon (P-Si) layer 19 is disposed at each of the intersections of the source lines 32 and the second leads 33b of the gate lines 33 on the inner surface of a lower substrate 1. The P-Si layer 19 has a substantially U-shaped two-dimensional form. A gate insulating film 50 is disposed on the P-Si layer 19 and the inner surface of the lower substrate 1 so as to spread over the substantially entire surface thereof. The gate insulating film 50 can be formed from, for example, silicon dioxide (SiO₂).

The gate insulating film 50 has a first contact hole 50a at a position that two-dimensionally overlaps a first end of the P-Si layer 19 and a portion of the corresponding source line 32 and a second contact hole 50b at a position that corresponds to a second end of the P-Si layer 19. The gate lines 33 are disposed on the inner surface of the gate insulating film 50. As illustrated in Fig. 2, the second leads 33b of the gate lines 33 extend in the x direction and are spaced in the y direction. The second leads 33b two-dimensionally overlap the respective P-Si layers 19.

A first insulating film 51 is disposed on the inner surfaces of the gate lines 33 and the gate insulating film 50. The first insulating film 51 can be formed from, for example, SiO₂. The first insulating film 51 has a first contact hole 51 a at a position corresponding to the first contact hole 50a and a second hole 51 b at a position corresponding to the second hole 50b. The source lines 32 and relay electrodes 77 are disposed on the first insulating film 51.

As illustrated in Fig. 2, the source lines 32 extend in the y direction and are spaced in the x direction. A portion of each of the source lines 32 two-dimensionally overlaps a portion of the first ends of the corresponding P-Si layers 19. A portion of the source line 32 extends within the first contact holes 50a and 51 a so that the source line 32 is electrically coupled to the first ends of the corresponding P-Si layers 19. Each of the relay electrodes 77 two-dimensionally overlaps a portion of the second end of the P-Si layer 19. A portion of the relay electrode 77 extends within the second holes 50b and 51 b so that the relay electrode 77 is electrically coupled to the second end of the P-Si layer 19. The source lines 32 are electrically coupled to the respective relay electrodes 77 via the respective P-Si layers 19. The LTPS-TFT elements 21 are disposed at positions that correspond to the respective P-Si layers 19 and that correspond to the respective intersections of the source lines 32 and the second leads 33b of the gate lines 33.

A second insulating film 52 is disposed on the inner surfaces of the relay electrodes 77 and the first insulating film 51. The second insulating film 52 can be formed from, for example, acrylic resin. The inner surface of the second insulating film 52 is substantially flat, and the second insulating film 52 constitutes a planarized film. The second insulating film 52 has a contact hole 52a in the vicinity of a first end of each of the relay electrodes 77 and of the second holes 50b and 51 b. In the invention, another insulating film that can be formed from silicon nitride (SiNx) may be provided between the first insulating film 51 and the second insulating film 52.

The common electrode 20 is disposed over the substantially entire inner surface of the second insulating film 52, which is connected to the COM terminal (see also Fig. 1). The common electrode 20 can be formed from, for example, a transparent material (e.g., ITO) and has an opening 20a at a position that corresponds to the contact hole 52a. A third insulating film 53 is disposed on a portion of the second insulating film 52 located within the contact hole 52a and the inner surface of the common electrode 20. The third insulating film 53 can be formed from SiO₂ or SiNx. The third insulating film 53 has a contact hole 53a at a position that corresponds to the contact hole 52a of the second insulating film 52. The third insulating film 53 is disposed between the common electrode 20 and the pixel electrodes 10, which will be described below, and therefore, the third insulating film 53 functions as a dielectric film that forms a storage capacitor. In order to maintain a sufficient capacitance of the storage capacitor, it is preferable that the thickness of the third insulating film 53, d1, be as thin as possible.

To achieve this object, the thickness d1 of the third insulating film 53 may be set so that the capacitance of the storage capacitor formed therein is, preferably, about 100 fF to about 600 fF, more preferably, about 200 fF to about 800 fF. In the case of a definition of 200 PPi or more, the thickness d1 of the third insulating film 53 preferably may be about 50 nm to about 400 nm. In the case of a definition of less than 200 PPi, the thickness d1 of the third insulating film 53 preferably may be about 200 nm to about 1000 nm.

The pixel electrodes 10 are disposed on the inner surface of the third insulating film 53 and in the respective subpixel regions SGs. Each of the pixel electrodes 10 can be formed from a transparent conductive material (e.g., ITO). The pixel electrode 10 is electrically coupled to the relay electrode 77 via the contact hole 52a. Therefore, a source signal is supplied from the source line 32 to the pixel electrode 10 via the LTPS-TFT element 21 and the relay electrode 77. The pixel electrode 10 faces and two-dimensionally overlaps the common electrode 20, and the third insulating film 53 is disposed therebetween. The pixel electrode 10 has a plurality of slits 10a for producing a fringe field (electric field E) between the common electrode 20 and the pixel electrode 10. As illustrated in Fig. 2, each of the silts 10a extends in a direction that is turned a predetermined angle clockwise with respect to the second leads 33b of the gate lines 33 and are spaced in a direction in which the source line 32 extends.

The alignment layer (not shown) is disposed on the inner surfaces of a portion of the third insulating film 53 and the pixel electrode 10. As illustrated in Fig. 2, the alignment layer has been subjected to rubbing processing in a direction of an angle of θ, preferably, about 5° counterclockwise (hereinafter referred to as "rubbing direction R") with reference to the x direction, which is a direction in which the second leads 33b of the gate lines 33 extend. Therefore, liquid crystal molecules 4a are aligned longitudinally along the rubbing direction R in the initial alignment state. A polarizer 11 is disposed below the lower substrate 1. A backlight 15 as an illuminating device is disposed below the polarizer 11. The element substrate 91 according to the first embodiment has a pixel arrangement described above.

The structure of the color filter substrate 92 corresponding to the above-described pixel arrangement is described below.

The color layer 6 (red color layer 6R, green color layer 6G, or blue color layer 6B) is disposed on the inner surface of an upper substrate 2 and in each of the subpixel regions SGs. The BM is disposed on the inner surface of the upper substrate 2, in a partition section for the subpixel regions SGs, and at a position that corresponds to each of the LTPS-TFT elements 21. The BM two-dimensionally overlaps the LTPS-TFT element 21, each of the source lines 32, and each of the second leads 33b of the gate lines 33. The overcoat layer 16 is disposed on the inner surfaces of the BM and the color layer 6. The overcoat layer 16 functions to protect the color layer 6 against attacks or contaminations caused by chemicals used in a process of manufacturing the liquid crystal apparatus 100. The alignment layer 18, which has been subjected to rubbing processing in a predetermined direction, is disposed on the inner surface of the overcoat layer 16. The color filter substrate 92 has a structure described above.

In a driven state, the liquid crystal apparatus 100 having the above-described structure realigns the liquid crystal molecules 4a, which have been aligned in the rubbing direction R in the initial alignment state as illustrated in Fig. 2, in the direction in which the source line 32 extends by rotating the liquid crystal molecules 4a counterclockwise by means of a fringe field (electric field E) produced in the direction in which the source line 32 extends. In a sectional structure illustrated in Fig. 3, a fringe field (electric field E) has a strong electric field component in a direction that is substantially parallel with the element substrate 91 (i.e., horizontal direction in Fig. 3) and a direction that is substantially perpendicular thereto (i.e., adjacent to the color filter substrate 92 in Fig. 3) and is produced between the pixel electrode 10 and the common electrode 20 via the slits 10a and the third insulating film 53. This controls the alignment of the liquid crystal molecules 4a and thus enables a transmissive display. More specifically, during the transmissive display, illumination light emitted from the backlight 15 travels along a path T illustrated in Fig. 3, passes through the common electrode 20, the pixel electrode 10, and the color layer 6 (RGB color layers), and reaches a viewer. In this case, the illumination light exhibits a predetermined hue and brightness by passing through the color layer 6. In this way, a desired color display image can be viewed by the viewer.

Distinctive operations and advantages in the liquid crystal apparatus 100 according to the first embodiment are described below in comparison with a comparative example.

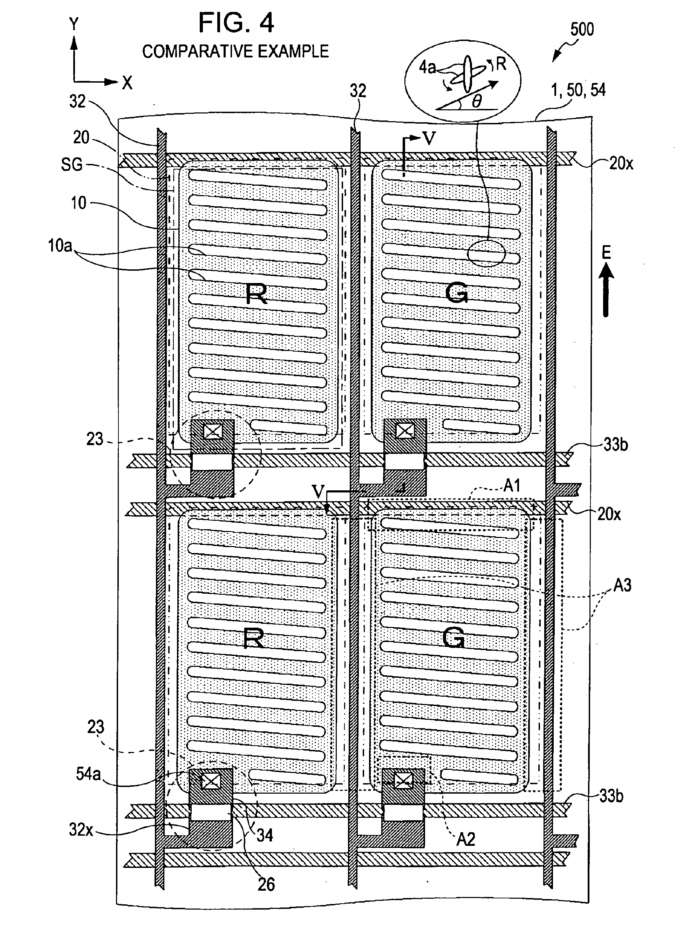

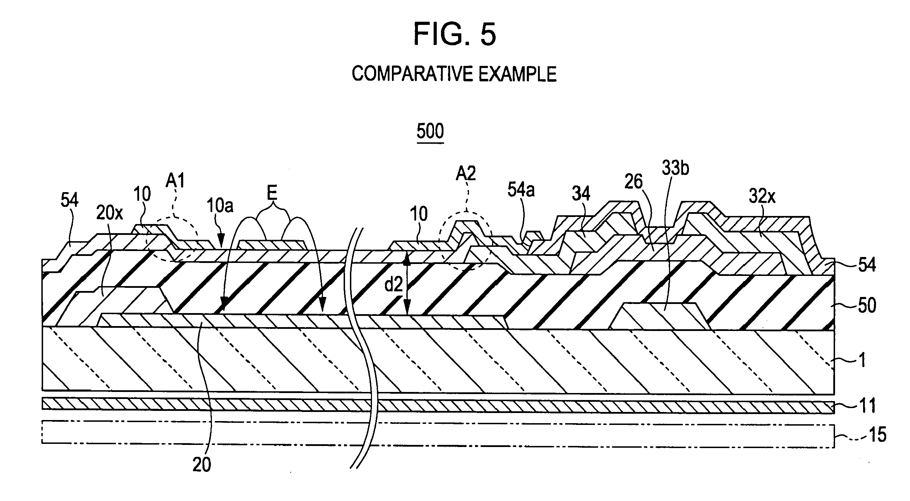

The structure of an FFS liquid crystal apparatus 500 according to the comparative example is described below with reference to Figs. 4 and 5. In the comparative example, the same reference numerals are used as in the first embodiment for similar components, and the components are simply described or the description thereof is omitted.

Fig. 4 shows a two-dimensional structure of four pixels in an element substrate 93 according to the comparative example, corresponding to Fig. 2. Fig. 5 shows a cross-section view taken along the line V-V in Fig. 4 and shows a cross-sectional structure of one subpixel taken from a position through one of α-Si TFT elements 23.

The liquid crystal apparatus 500 includes the element substrate 93 having the α-Si TFT elements 23, a color filter substrate 92, and a liquid crystal layer 4 formed of a liquid crystal material in a gap between the element substrate 93 and the color filter substrate 92.

The structure of the element substrate 93 is described below.

A common electrode 20 is disposed on the inner surface of a lower substrate 1 and for each subpixel region SG. The common electrodes 20 are indicated by dot-dot-dashed lines. The common electrodes 20 can be formed from ITO. As illustrated in Fig. 4, common electrode lines 20x are disposed on the lower substrate 1 and a portion of the common electrodes 20. The common electrode lines 20x are spaced in the y direction and extend in the x direction. Therefore, the common electrodes 20 are electrically coupled to the respective common electrode lines 20x. Although not shown in the drawings, each of the common electrode lines 20x is electrically coupled to a COM terminal at a predetermined position on the element substrate 93. Second leads 33b of gate lines 33 are spaced in the y direction and extend in the x direction on the lower substrate 1. The second leads 33b are disposed in the vicinity of the common electrode lines 20x corresponding to the adjacent pixel.

A gate insulating film 50 is disposed on the common electrodes 20, the common electrode lines 20x, the gate lines 33, and the lower substrate 1. An α-Si layer 26 included in each of the α-Si TFT elements 23 is disposed on the gate insulating film 50 and is adjacent to each of the intersections of source lines 32, which will be described below, and the second leads 33b of the gate lines 33.

In Fig. 4, the source lines 32 extend in the y direction on the gate insulating film 50. Each of the source lines 32 has a bent section 32x electrically coupled to the corresponding α-Si layer 26. The bent section 32x is bent on the α-Si layer 26 so as to overlap the α-Si layer 26. A drain electrode 34 is disposed on each of the α-Si layers 26 and on the gate insulating film 50. The drain electrode 34 is electrically coupled to the α-Si layer 26. The bent section 32x of the source line 32 is electrically coupled to the drain electrode 34 via the α-Si layer 26. The α-Si TFT element 23 is disposed in this region.

A passivation layer 54 is disposed on the gate insulating film 50 and the α-Si TFT element 23. The passivation layer 54 can be formed from, for example, SiNx. The passivation layer 54 has a contact hole 54a at a position that two-dimensionally overlaps a portion of the common electrode 20 and that overlaps a first end of the drain electrode 34.

A pixel electrode 10 is disposed on the passivation layer 54 for each subpixel region SG. The pixel electrode 10 can be formed from, for example, ITO. The structure of the pixel electrode 10 is substantially the same as that in the first embodiment. That is, the pixel electrode 10 has a plurality of slits 10a and is electrically coupled to the drain electrode 34 via the contact hole 54a. Therefore, a source signal is supplied from the source line 32 to the pixel electrode 10 via the α-Si TFT element 23. An alignment film is disposed on the pixel electrode 10. The alignment film has been subjected to rubbing processing in the same direction as in the first embodiment.

The liquid crystal apparatus 500 according to the comparative example having the above-described structure controls the alignment of liquid crystal molecules in a driven state on the basis of the same principle as in the liquid crystal apparatus 100 according to the first embodiment and performs a transmissive display.

The liquid crystal apparatus according to the comparative example having the above-described structure has a problem described below.

As illustrated in Fig. 5, the liquid crystal apparatus 500 including the α-Si TFT element 23 according to the comparative example has no planarized film (second insulating film 52), which is included in the apparatus in the first embodiment. Therefore, in particular, in an area A1 which two-dimensionally overlaps a portion of the common electrode line 20x, an area A2 which two-dimensionally overlaps a portion of the drain electrode 34 included in the α-Si TFT element 23, and an area A3 which two-dimensionally overlaps a portion of the source line 32, the pixel electrode 10 has a nonflat section (stepped section). Liquid crystal molecules 4a in the vicinity of the stepped section of the pixel electrode 10 are irregularly aligned. This causes adverse effects on the display quality, so the stepped section of the pixel electrode 10 cannot be used as a display region. Therefore, generally, the color filter substrate 92 includes the BM for covering the display quality degradation caused by such irregular alignment of the liquid crystal molecules 4a at a position that corresponds to the stepped section of the pixel electrode 10. This produces a problem of reducing the aperture ratio in the comparative example. Since the common electrode line 20x is provided in addition to the common electrode 20 in the comparative example, the aperture ratio further decreases.

In the comparative example, a storage capacitor is formed between the passivation layer 54 and the gate insulating film 50, which function as a dielectric film between the pixel electrode 10 and the common electrode 20. An area where the pixel electrode 10 and the common electrode 20 two-dimensionally overlap each other decreases with a decrease in the aperture ratio, so there is a possibility that a desired storage capacitor cannot be obtained. In addition, since the thickness of the dielectric film, d2, in the comparative example is much larger than the thickness d1 in the first embodiment, the capacitance of the storage capacitor is further reduced according to a general capacitance formula. It is thus difficult to apply the liquid crystal apparatus having the above-described structure according to the comparative example as a high-definition liquid crystal display apparatus.

In contrast to this, the liquid crystal apparatus 100 according to the first embodiment includes the second insulating film (planarized film) 52 having flatness in the element substrate 91 below the pixel electrode 10, the third insulating film 53, and the common electrode 20. Therefore, the pixel electrode 10, the third insulating film 53, and the common electrode 20 that are positioned in areas that overlap at least the source line 32 and the LTPS-TFT element 21 can be flat. In other words, the electrode 10 has no nonflat section (stepped section) within the subpixel region SG. This reduces the occurrence of irregular alignment of the liquid crystal molecules 4a in the vicinity of the source line 32 and the LTPS-TFT element 21. As a result, the pixel electrode 10 can extend to the vicinity of another adjacent pixel electrode 10. Accordingly, the liquid crystal apparatus according to the first embodiment can achieve a higher aperture ratio than that in the comparative example.

In the first embodiment, since the common electrode 20 is disposed on the second insulating film (planarized film) 52 so as to cover the substantially entire surface thereof (except for the contact hole 52a), the value of a time constant relating to the common electrode 20 (the product of the capacitance C and the resistance R) can be small. Therefore, the liquid crystal apparatus according to the first embodiment has no common electrode line 20x, which is included in the apparatus in the comparative example. From this point of view, the effective area of the pixel electrode 10 can be further increased and thus a higher aperture ratio can be achieved. Accordingly, the liquid crystal apparatus according to the first embodiment is suitably used as a high-definition liquid crystal display apparatus.

In the first embodiment, since the third insulating film 53, which functions as a dielectric film, is disposed between the pixel electrode 10 and the common electrode 20, the thickness of the third insulating film 53 can be easily adjusted, and thus the capacitance of the storage capacitor can be adjusted more easily than that in the comparative example. In the case where a large capacitance of the storage capacitor is required for, for example, a high-definition liquid crystal display apparatus, setting a thin thickness of the third insulating film 53 enables a sufficient capacitance of the storage capacitor. Accordingly, the display quality can be improved and the power consumption can be reduced.

Preferably, the thickness d1 of the third insulating film 53 may be set so that the capacitance of the storage capacitor formed therein is, preferably, about 100 fF to about 600 fF, more preferably, about 200 fF to about 800 fF. In the case of a definition of 200 PPi or more, the thickness d1 of the third insulating film 53 preferably may be about 50 nm to about 400 nm. In the case of a definition of less than 200 PPi, the thickness d1 of the third insulating film 53 preferably may be about 200 nm to about 1000 nm.

The strength of a fringe field (electric field E) formed between the pixel electrode 10 and the common electrode 20 increases with a reduction in the thickness d1 of the third insulating film 53, and the liquid crystal molecules 4a can be easily operated even with a lower voltage. For example, if the thickness d1 of the third insulating film 53 is set at about 50 nm to about 200 nm in a normally-black display mode, a driving voltage that is applied between the pixel electrode 10 and the common electrode 20 and that corresponds to white display can be on the order of about 2 V to about 5 V; if the thickness d1 of the third insulating film 53 is set at about 200 nm to about 600 nm in the normally-black display mode, a driving voltage that is applied between the pixel electrode 10 and the common electrode 20 and that corresponds to white display can be on the order of about 3 V to about 5 V. In addition, since the thickness d1 of the third insulating film 53 is significantly small, the throughput when the third insulating film 53 is formed can also be improved.

In the first embodiment, since the BM is disposed in the color filter substrate 92 at a position that corresponds to the above-described contact holes, even if the liquid crystal molecules 4a are irregularly aligned in the vicinity of the contact holes, a region of the irregularly aligned liquid crystal molecules can be covered by the BM. As a result, the display quality degradation caused by the irregularly aligned liquid crystal molecules 4a can be reduced. Second Embodiment

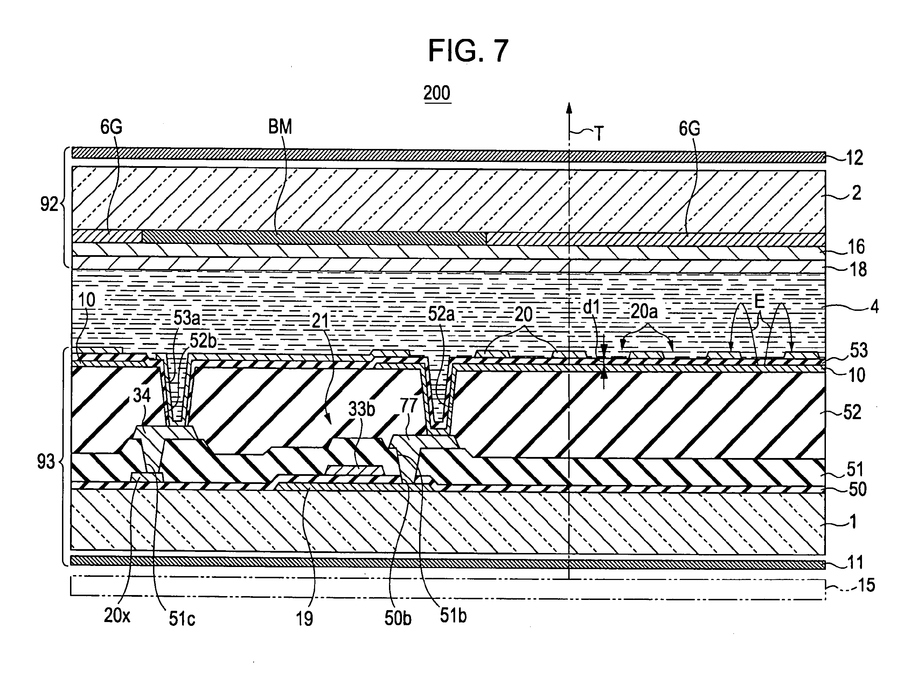

The structure of a liquid crystal apparatus 200 according to a second embodiment is described below with reference to Figs. 6 and 7. The liquid crystal apparatus 200 according to the second embodiment is an FFS-mode liquid crystal apparatus including an LTPS-TFT element 21 and is of a transmissive type. In the second embodiment, the same reference numerals are used as in the first embodiment for similar components, and the components are simply described or the description thereof is omitted.

Fig. 6 shows a two-dimensional structure of four pixels in an element substrate 93 according to the second embodiment. Fig. 7 shows a cross-section view taken along the line VII-VII in Fig. 6 and shows a cross-sectional structure of one subpixel taken from a position through one of the LTPS-TFT elements 21.

The pixel arrangement in the element substrate 93 according to the second embodiment is first described below with reference to Figs. 6 and 7.

A low-temperature polysilicon (P-Si) layer 19 is disposed at each of the intersections of source lines 32 and second leads 33b of gate lines 33 on the inner surface of a lower substrate 1. The P-Si layer 19 has a substantially U-shaped two-dimensional form. A gate insulating film 50 is disposed on the P-Si layer 19 and the inner surface of the lower substrate 1 so as to spread over the substantially entire surface thereof. The gate insulating film 50 has a first contact hole 50a and a second hole 50b. The first contact hole 50a and the second hole 50b are disposed at the same positions as in the first embodiment.

As illustrated in Fig. 6, the second leads 33b of the gate lines 33 extend in the x direction and are spaced in the y direction on the inner surface of the gate insulating film 50. A portion of each of the second leads 33b two-dimensionally overlaps the corresponding P-Si layer 19. Common electrode lines 20x are disposed on the inner surface of the gate insulating film 50 and in the vicinity of the second lead 33b of the gate line 33 so as to extend in the same direction as a direction in which the second leads 33b extend. The common electrode lines 20x preferably may be formed from the same material as that of the gate lines 33. Each of the common electrode lines 20x is electrically coupled to a COM terminal in a driver IC 40.

A first insulating film 51 is disposed on the inner surfaces the gate lines 33 and the gate insulating film 50. The first insulating film 51 has a first contact hole 51 a and a second hole 51 b. The first contact hole 51 a and the second hole 51 b are disposed at the same positions as in the first embodiment. The first insulating film 51 further has a third contact hole 51 c at a position that is in the vicinity of the P-Si layer 19 and that corresponds to the common electrode line 20x.

In Fig. 6, the source lines 32 are disposed on the inner surface of the first insulating film 51 and extend in the y direction between adjacent subpixel regions SGs. A portion of the source line 32 is electrically coupled to a first end of the P-Si layer 19 via the first contact holes 50a and 51 a. First relay electrodes 77 are disposed on the inner surface of the first insulating film 51 and two-dimensionally overlap second ends of the respective P-Si layers 19. Second relay electrodes 34 are disposed on the inner surface of the first insulating film 51. Each of the second relay electrodes 34 two-dimensionally overlaps the third contact hole 51 c and is present between the common electrode line 20x and the gate line 33.

Each of the first relay electrodes 77 is electrically coupled to the second end of the corresponding P-Si layer 19 via the corresponding second hole 50b and the corresponding second hole 51 b. Each of the source lines 32 is electrically coupled to the corresponding first relay electrode 77 via the corresponding P-Si layer 19. Therefore, the LTPS-TFT element 21 is disposed at each of the intersections of the source lines 32 and the second leads 33b of the gate lines 33. Each of the second relay electrodes 34 is electrically coupled to the corresponding common electrode line 20x via the corresponding third contact hole 51 c.

A second insulating film 52 is disposed on the source line 32, the first relay electrode 77, the second relay electrode 34, and the first insulating film 51. The second insulating film 52 functions as a planarized film and has a second contact hole 52a. The position of the contact hole 52a is the same as in the first embodiment. A pixel electrode 10 is disposed on the inner surface of the second insulating film 52 for each subpixel region SG. The pixel electrode 10 is electrically coupled to the first relay electrode 77 via the contact hole 52a. Therefore, a source signal is supplied from the source line 32 to the pixel electrode 10 via the LTPS-TFT element 21 and the first relay electrode 77.

A third insulating film 53 is disposed on the inner surfaces of the pixel electrode 10 and the second insulating film 52. The third insulating film 53 functions as a dielectric film and has a contact hole 53a. The position of the contact hole 53a is the same as in the first embodiment. Common electrodes 20 are disposed on the inner surface of the third insulating film 53. The common electrodes 20 face and two-dimensionally overlap the respective pixel electrodes 10 such that the third insulating film 53 is disposed therebetween. In the second embodiment, each of the common electrodes 20 for one subpixel two-dimensionally overlaps the source line 32 positioned to the left of the subpixel. The common electrodes 20 are electrically coupled to the respective second relay electrodes 34 via the respective contact holes 53a. Therefore, each of the common electrodes 20 is electrically coupled to the COM terminal in the driver IC 40 via the corresponding second relay electrode 34 and the corresponding common electrode line 20x. The common electrode 20 has a plurality of slits 20a for producing a fringe field (electric field E) between the common electrode 20 and the pixel electrode 10. As illustrated in Fig. 6, each of the silts 20a extends in a direction that is turned a predetermined angle clockwise with respect to the second leads 33b of the gate lines 33 and are spaced in a direction in which the source line 32 extends.

An alignment layer (not shown) is disposed on the inner surfaces of a portion of the third insulating film 53 and the common electrode 20. As illustrated in Fig. 6, the alignment layer has been subjected to rubbing processing in a direction of an angle of θ, preferably, about 5° counterclockwise with reference to the x direction, which is a direction in which the common electrode line 20x extends. Therefore, liquid crystal molecules 4a are aligned longitudinally along the rubbing direction R in the initial alignment state. The element substrate 93 according to the second embodiment has a pixel arrangement described above.

The structure of a color filter substrate 92 corresponding to the above-described pixel arrangement is substantially the same as that in the first embodiment, except that the BM two-dimensionally overlaps the source line 32, the second lead 33b of the gate line 33, the common electrode line 20x, and the LTPS-TFT element 21. Other description of the color filter substrate 92 is omitted.

The liquid crystal apparatus 200 having the above-described structure controls the alignment of the liquid crystal molecules 4a in a driven state on the basis of the same principle as the liquid crystal apparatus 100 according to the first embodiment, thus allowing a desired color display image to be viewed by the viewer.

Distinctive operations and advantages in the liquid crystal apparatus 200 according to the second embodiment are described below.

Since the liquid crystal apparatus 200 includes the second insulating film (planarized film) 52, which has flatness, in the element substrate 93, the same operations and advantages as in the first embodiment can be obtained, so a higher aperture ratio can be achieved. However, in the second embodiment, in order to reduce the value of a time constant relating to the common electrode 20, the common electrode line 20x, which has a three-layer structure including a titanium layer, an aluminum layer, and a titanium layer and is formed from a low resistance material, is intentionally provided. This reduces the display quality degradation. However, the aperture ratio is correspondingly smaller, compared with that in the first embodiment.

The details are described below. The common electrode 20 is formed from a high resistance material (e.g., ITO). In the case where the common electrode 20 is disposed so as to cover the substantially entire surface of the viewing area V, the area of the common electrode 20 is large and thus the resistance of the common electrode 20 is high. This leads to a high time constant relating the common electrode 20 and may cause adverse effects on the display quality. In contrast, in the second embodiment, the common electrode 20, which is formed from ITO, is provided for each subpixel region SG. The area of the common electrode 20 in the second embodiment can be smaller than that of the common electrode provided so as to cover the substantially entire surface. In addition, the common electrode 20 is connected to the common electrode line 20x, which is formed from a low resistance material. Therefore, the total resistance of the common electrode line 20x and the common electrode 20 can be small, and thus the time constant relating to the common electrode 20 can be small. As a result, adverse effects on the display quality can be reduced. If the time constant relating to the common electrode 20 can be sufficiently reduced by use of a structure described in the second embodiment, the common electrode lines 20x may not be provided, as in the first embodiment. In this case, an aperture ratio substantially the same as that in the first embodiment can be obtained.

In the second embodiment, since the third insulating film 53, functioning as a dielectric film, is disposed between the pixel electrode 10 and the common electrode 20, the capacitance of the storage capacitor can be easily adjusted and the thickness d1 of the third insulating film 53 can be significantly small. Therefore, the second embodiment can obtain the same operations and advantages as those in the first embodiment.

In particular, in the second embodiment, the common electrode 20 is provided so as to two-dimensionally overlap the source line 32, and therefore, adverse effects caused by a fringe field (electric field E) produced in a first subpixel to another subpixel adjacent to the first subpixel can be reduced. The details are described below with reference to Figs. 8A and 8B.

Fig. 8B is a fragmentary sectional view of the element substrate 93 taken along the line XIIIB-XIIIB in Fig. 6 and shows one of the source lines 32 and two subpixels adjacent to opposite sides of the source line 32. Fig. 8A is a fragmentary sectional view of an element substrate 95 according to a comparative example corresponding to Fig. 8B.

First, the structure of the element substrate 95 according to the comparative example is briefly described below.

A gate insulating film 50 is disposed on a lower substrate 1. A first insulating film 51 is disposed on the gate insulating film 50. A source line 32 extends from the front of the drawing to the back thereof on the first insulating film 51. A second insulating film 52 is disposed on the source line 32 and the first insulating film 51. The second insulating film 52 functions as a planarized film. Common electrodes 20 are disposed on the second insulating film 52. A third insulating film 53 is disposed on the common electrodes 20 and functions as a dielectric film. A pixel electrode 10 is disposed on the third insulating film 53 so as to correspond to each of the opposite sides of the source line 32. In the following, for the sake of convenience, the pixel electrode 10 at the left of the drawing is represented as the pixel electrode 10L, and the pixel electrode 10 at the right of the drawing is represented as the pixel electrode 10R. The element substrate 95 according to the comparative example has this structure.

In the comparative example having the above-described structure, in a driven state, as illustrated in Fig. 8A, a strong fringe field (electric field E) is produced between the pixel electrodes 10 and the common electrode 20 in a direction that is substantially parallel with the substrate surface of the element substrate 95 and in a direction that is substantially perpendicular thereto (the upper side of the drawing). At this time, for example, if a voltage for driving the pixel electrode 10L is high, the strength of a fringe field (electric field E) produced between the pixel electrode 10L and the common electrode 20 is high correspondingly. An electric field component Ex of the fringe field (electric field E) affects the adjacent pixel electrode 10R, and may affect the alignment of liquid crystal molecules 4a directly above the pixel electrode 10R.

In contrast to the comparative example, the second embodiment does not cause the above-described defect.

That is, in the second embodiment, in a driven state, as illustrated in Fig. 8B, a fringe field (electric field E) is produced between the pixel electrodes 10 and the common electrode 20 that is disposed directly above the source line 32 and two-dimensionally overlaps the source line 32. In the second embodiment, for example, if a voltage for driving the pixel electrode 10L is high, the strength of a fringe field (electric field E) produced between the pixel electrode 10L and the common electrode 20 is high correspondingly. However, the presence of the common electrode 20 that is disposed directly above the source line 32 and two-dimensionally overlaps the source line 32 prevents the produced fringe field (electric field E) from affecting the adjacent pixel electrode 10R. As a result, the defect in the comparative example does not appear. Adverse effects on the alignment of liquid crystal molecules 4a directly above the adjacent pixel electrode 10R can be prevented. An excellent display quality can be obtained and a higher definition can be achieved. Other operations and advantages in the second embodiment are substantially the same as those in the first embodiment.

### Modification

In the first and second embodiments, the invention is applied to a transmissive liquid crystal apparatus. However, the invention is not limited to this application. The invention may be applied to a reflective or transflective liquid crystal apparatus.

In the first and second embodiments, the invention is applied to a liquid crystal apparatus that includes an LTPS-TFT element. However, the invention is not limited to this application. The invention may be applied to an apparatus that includes a three-terminal element (e.g., P-Si TFT element or α-Si TFT element) or a two-terminal nonlinear element (e.g., TFD element).

In the first embodiment, the slits 10a in the pixel electrode 10 extend in a direction that is turned a predetermined angle clockwise with respect to the second leads 33b of the gate lines 33. However, the invention is not limited to this structure. The slits 10a in the pixel electrode 10 may be spaced in a direction in which the second leads 33b of the gate lines 33 extend and may extend in a direction in which the source lines 32 extend. In the second embodiment, the slits 20a in the common electrode 20 may be spaced in a direction in which the second leads 33b of the gate lines 33 extend and may extend in a direction in which the source lines 32 extend. However, it is preferable that the rubbing direction R be set at a predetermined angle, more preferably, about 5°, clockwise with respect to the direction in which the source lines 32 extend. This enables the liquid crystal molecules 4a to be easily realigned in a direction that is substantially perpendicular to the slits 10a or 20a by use of a fringe field (electric field E).

In the second embodiment, common electrodes 20 for subpixels corresponding to the color layers 6R and 6B two-dimensionally overlap the corresponding source lines 32, and a common electrode 20 for a subpixel corresponding to the color layer 6G does not two-dimensionally overlap source lines 32 positioned at the opposite sides of the subpixel. However, the invention is not limited to this structure. The common electrodes 20 may be formed in strip shapes so as to face a group of the subpixel regions SGs aligned in the horizontal direction (x direction) in Fig. 1. In this case, a portion of the source line 32 between the horizontally adjacent pixel electrodes 10 in Fig. 1 two-dimensionally overlaps the common electrode 20. As a result, adverse effects caused by a fringe field (electric field E) produced in a first subpixel to another pixel adjacent to the first subpixel can be reduced.

The common electrode lines 20x in the apparatus according to the second embodiment may be provided to that in the first embodiment.

Other various modifications of the invention can be made without departing from the scope of the invention.

### Electronic Device

Examples of an electronic device that can include the liquid crystal apparatus 100 according to the first embodiment or the liquid crystal apparatus 200 according to the second embodiment are described below with reference to Figs. 9A and 9B.

A first example is described below in which the liquid crystal apparatus 100 according to the first embodiment or the liquid crystal apparatus 200 according to the second embodiment is incorporated as a display unit in a mobile personal computer (so-called notebook computer). Fig. 9A is a perspective view of the mobile personal computer. As illustrated in Fig. 9A, a personal computer 710 includes a main unit 712 and a display unit 713. The main unit 712 includes a keyboard 711. The display unit 713 includes a panel to which the liquid crystal display apparatus according to the invention is applied.

A second example is described below in which the liquid crystal apparatus 100 according to the first embodiment or the liquid crystal apparatus 200 according to the second embodiment is incorporated as a display unit in a cellular phone. Fig. 9B is a perspective view of the cellular phone. As illustrated in Fig. 9B, a cellular phone 720 includes a plurality of operating buttons 721, an earpiece 722, a mouthpiece 723, a display unit 724 to which the liquid crystal apparatus 100 according to the first embodiment or the liquid crystal apparatus 200 according to the second embodiment is applied.

Other examples of an electronic device to which the liquid crystal apparatus 100 according to the first embodiment or the liquid crystal apparatus 200 according to the second embodiment is applicable include, in addition to a personal computer and a cellular phone, which are illustrated in Figs. 9A and 9B, a liquid crystal television, a viewfinder video recorder, a monitor-direct-view-type video recorder, a car navigation system, a pager, an electronic notebook, a personal digital assistant, a calculator, a word processor, a workstation, a videophone, a POS terminal, and a digital still camera. Other examples will be apparent to the skilled addressee.

The foregoing description has been given by way of example only and it will be appreciated by a person skilled in the art that modifications can be made without departing from the scope of the present invention.

## Claims

1. A liquid crystal apparatus comprising:
a common electrode;
a switching element;
a pixel electrode connected to the switching element;
a first insulating film between the common electrode and the pixel electrode; and
a planarized film above the switching element;
wherein the pixel electrode and the common electrode two-dimensionally overlap each other in a display region, and an alignment of liquid crystal is controlled by an electric field produced above the pixel electrode and by an electric field produced between the common electrode and the pixel electrode, and
wherein the common electrode is disposed above the planarized film, the first insulating film is disposed above the common electrode, and the pixel electrode is disposed above the first insulating film.

2. The liquid crystal apparatus according to Claim 1, wherein the pixel electrode is electrically coupled to the switching element via a contact hole in the planarized film, and the common electrode has an opening at a position that corresponds to the contact hole.

3. The liquid crystal apparatus according to Claim 1 or Claim 2, wherein the common electrode covers a substantially entire surface of the planarized film.

4. The liquid crystal apparatus according to any one of Claim 1 to Claim 3, wherein the pixel electrode has a slit, and a lateral electric field is produced between the pixel electrode and the common electrode via the slit and the first insulating film.

5. The liquid crystal apparatus according to any one of Claim 1 to Claim 4, further comprising:
a second insulating film; and
a relay electrode disposed on the second insulating film,
wherein the switching element is a TFT element, the second insulating film is disposed on the TFT element, and the relay electrode electrically couples the TFT element and the pixel electrode together.

6. The liquid crystal apparatus according to any one of Claim 1 to Claim 5, wherein each of the common electrode and the pixel electrode is formed from a transparent material.

7. A liquid crystal apparatus comprising:
a substrate that retains liquid crystal;
a first electrode;
a second electrode; and
a dielectric film between the first electrode and the second electrode,
wherein the first electrode and second electrode are provided in the substrate and two-dimensionally overlap each other,
wherein an alignment of the liquid crystal is controlled by an electric field produced above the second electrode and by an electric field produced between the first electrode and the second electrode,
wherein a storage capacitor is formed between the first electrode and second electrode, and
wherein the dielectric film has a thickness that enables the storage capacitor to have a capacitance of about 100 fF to about 800 fF.

8. The liquid crystal apparatus according to Claim 7, further comprising:
a switching element provided in the substrate; and
a planarized film above the switching element,
wherein the first electrode, the dielectric film, and the second electrode are disposed above the planarized film.

9. The liquid crystal apparatus according to Claim 7 or Claim 8, wherein the second electrode has a slit, and a lateral electric field is produced between the first electrode and the second electrode via the slit and the dielectric film.

10. The liquid crystal apparatus according to any one of Claim 7 to Claim 9, wherein the dielectric film has a thickness that enables the storage capacitor to have a capacitance of about 100 fF to about 600 fF.

11. The liquid crystal apparatus according to any one of Claim 7 to Claim 9, wherein the dielectric film has a thickness that enables the storage capacitor to have a capacitance of about 200 fF to about 800 fF.

12. The liquid crystal apparatus according to any one of Claim 7 to Claim 11, wherein the first electrode is a common electrode, and the second electrode is at least one pixel electrode electrically coupled to the switching-element.

13. The liquid crystal apparatus according to any one of Claim 7 to Claim 11, wherein the first electrode is at least one pixel electrode electrically coupled to the switching element, and the second electrode is a common electrode.

14. The liquid crystal apparatus according to any one of Claim 7 to Claim 13, each of the common electrode and the pixel electrode is formed from a transparent material.

15. The liquid crystal apparatus according to any one of Claim 7 to Claim 14, further comprising a lead connected to the switching element,
wherein the lead is covered with the planarized film.

16. A liquid crystal apparatus comprising:
at least one common electrode;
a plurality of pixel electrodes; and
an insulating film between the common electrode and the plurality of pixel electrodes;
wherein the insulating film is disposed above the plurality of pixel electrodes, and the common electrode is disposed above the insulating film,
wherein an alignment of liquid crystal is controlled by an electric field produced above the common electrode and by an electric field produced between the common electrode and each of the plurality of pixel electrodes, and
wherein the common electrode extends to a gap between the plurality of pixel electrodes.

17. The liquid crystal apparatus according to Claim 16, further comprising:
a substrate;
a switching element provided in the substrate; and
a planarized film above the switching element,
wherein the pixel electrodes are disposed above the planarized film.

18. The liquid crystal apparatus according to Claim 16 or Claim 17, further comprising a lead connected to the switching element,
wherein the lead is disposed between the plurality of pixel electrodes, two-dimensionally overlaps the common electrode, and is covered with the planarized film.

19. The liquid crystal apparatus according to Claim 18, wherein the lead is a source line connected to the switching element.

20. The liquid crystal apparatus according to any one of Claim 16 to Claim 19, wherein the at least one common electrode includes a plurality of common electrodes provided for the respective pixel electrodes, and
wherein each of the common electrodes is connected to a common electrode line having a resistance smaller than a resistance of the common electrode.

21. The liquid crystal apparatus according to any one of Claim 16 to Claim 20, wherein each of the common electrode and the pixel electrodes is formed from a transparent material.

22. An electronic device including the liquid crystal apparatus according to any one of Claim 1 to Claim 21.
